# EUROPEAN PATENT SPECIFICATION

(11) **EP 2 883 896 B1**
(45) Date of publication and mention of the grant of the patent: **08.03.2023**
(21) Application number: 14197580.5
(22) Date of filing: 12.12.2014
(51) Int. Cl.: C08G 59/40, C08G 59/50

(54) **Multifunctional epoxy resin with enhanced flame resistance**
Multifunktionales Epoxidharz mit verbesserter Flammwidrigkeit
Résine époxy multifonctionnel avec résistance à la flamme améliorée

(30) Priority: 13.12.2013 IT TO20131021
(43) Date of publication of application: 17.06.2015
(73) Proprietor: LEONARDO S.P.A., 00195 Roma (IT)
(72) Inventor: Guadagno, Liberata, 84084 Fisciano (SA) (IT); Raimondo, MariaLuigia, 84025 Eboli (SA) (IT); Longo, Pasquale, 84047 Capaccio (SA) (IT); Bonnaud, Leila, 59300 Valenciennes (FR); Murariu, Oltea, 7000 Mons (BE); Dubois, Philippe, 4260 Braives (BE); Russo, Salvatore, 80010 Quarto (NA) (IT); Iannuzzo, Generoso, 83100 Avellino (IT)
(74) Representative: Gerbino, Angelo

(56) References cited:
- US-A1- 2010 087 616
- SHREE MEENAKSHI K ET AL: "Development and characterization of new phosphorus based flame retardant tetraglycidyl epoxy nanocomposites for aerospace application", BULLETIN OF MATERIALS SCIENCE, SPRINGER INDIA, NEW DELHI, vol. 35, no. 2, 28 April 2012 (2012-04-28) , pages 129-136, XP035056654, ISSN: 0973-7669, DOI: 10.1007/S12034-012-0271-0
- INDRA K VARMA ET AL: "Curing of Epoxy Resin with Phosphorylated Diamine", JOURNAL OF MACROMOLECULAR SCIENCE : PART A - CHEMISTRY, MARCEL DEKKER, NEW YORK, NY, US, vol. 23, no. 1, 1 January 1986 (1986-01-01), pages 19-36, XP008174390, ISSN: 0022-233X, DOI: 10.1080/00222338608063373 [retrieved on 2006-12-05]
- LEVCHIK S V ET AL: "Epoxy resins cured with aminophenylmethylphosphine oxide--II. Mechanism of thermal decomposition", POLYMER DEGRADATION AND STABILITY, BARKING, GB, vol. 60, no. 1, 1 April 1998 (1998-04-01), pages 169-183, XP004294340, ISSN: 0141-3910, DOI: 10.1016/S0141-3910(97)00064-5
- LA ROSA A D ET AL: "An oxygen index evaluation of flammability on modified epoxy/polyester systems", POLYMER, ELSEVIER SCIENCE PUBLISHERS B.V, GB, vol. 40, no. 14, 1 June 1999 (1999-06-01), pages 4093-4098, XP004160555, ISSN: 0032-3861, DOI: 10.1016/S0032-3861(98)00646-6
- TAKALA M ET AL: "Thermal, mechanical and dielectric properties of nanostructured epoxy-polyhedral oligomeric silsesquioxane composites", IEEE TRANSACTIONS ON DIELECTRICS AND ELECTRICAL INSULATION, IEEE SERVICE CENTER, PISCATAWAY, NJ, US, vol. 15, no. 5, 1 October 2008 (2008-10-01), pages 1224-1235, XP011280421, ISSN: 1070-9878, DOI: 10.1109/TDEI.2008.4656229
- BIAGIO DE VIVO ET AL: "Electrical properties of multi-walled carbon nanotube/tetrafunctional epoxy-amine composites", AIP CONFERENCE PROCEEDINGS, 1 January 2012 (2012-01-01), pages 199-201, XP055728793, NEW YORK, US ISSN: 0094-243X, DOI: 10.1063/1.4738442

## Description

Structural materials can be designed to have integrated electrical, electromagnetic, flame resistance, and possibly other functionalities that work in synergy to provide advantages that reach beyond that of the sum of the individual capabilities. Materials of this kind have tremendous potential to impact future structural performance by reducing size, weight, cost, power consumption and complexity while improving efficiency, safety and versatility. The development of multifunctional materials or "smart materials" is currently a challenge involving an increasing number of material scientists.

The increased interest in multifunctional materials and structures is driven by the need for the development of new materials and structures that simultaneously perform multiple structural functions, combined non-structural and structural functions, or both. Multifunctional materials are necessarily composite materials, and the strong growth in the use of composites has been greatly influenced by multifunctional design requirements. Until now, the traditional approach to the development of structures is to address the load-carrying function and other functional requirements separately, resulting in a suboptimal load-bearing structure with add-on attachments which perform the non-structural functions with the penalty of added weight. Recently, however, there has been increased interest in the development of load-bearing materials and structures which have integral non-load-bearing functions, guided by recent discoveries about nanofillers and nanotechnology that can help to project materials working as multifunctional systems.

In the last decades the use of composite in the primary structures in the aeronautics is rapidly increased. The most representative example is the Boing 787 Dreamliner built with more than 50% of composites. The fuselage and wings of the new Boeing 787 are constructed of composite. The composite consists of multiple, alternately directed layers of epoxy-impregnated continuous graphite fibers (Carbon fiber reinforced composites-CFRCs). Unfortunately, the epoxy resin between the carbon fiber layers can burn under accidental aircraft fire conditions; for this reason FAA certification for Boeing 787 required to demonstrate that the level of fire safety in the B-787 was equivalent to a conventional transport (aluminum) aircraft. This regulation has been extended to any other structural aeronautic materials. It is evident that no new material can be developed in this field without considering its behavior in the flame condition. Successful strategies to reduce the flammability of structural materials are extremely important in the field of aeronautic and aerospace applications.

On the other hand, some modem aircrafts are made of advanced composites which are significantly less conductive than aluminum. Then, the composites are reinforced with conductive metal fibres or metal screens in order to dissipate lightning currents. But many of these solutions add additional weight and reduces composite advantage.

In sum, the aeronautic composites hitherto developed suffer of limitations, as far as the properties of flame resistance and electrical conductivity are concerned.

K. S. Meenakshi et al., Bull. Mater. Sci, Vol. 35, No. 2, April 2012, pp. 129-136 reports about the development and characterisation of new phosphorous based flame retardant tetraglycidyl epoxy nanocomposites for aerospace application and discloses epoxy resin compositions comprising amine-functionalised POSS.

The object of the present invention is thus to overcome the mentioned limitations of the prior art.

Such object is attained by an epoxy resin as claimed having a limiting oxygen index (LOI) measured according to standard ASTM 2863, which is at least 28% wherein the resin incorporates at least a silsesquioxane compound (POSS).

The resins of the invention are able to increase flame resistance and their use in several industrial processes allows to produce a new generation of composites able to perform multiple functions and, in addition, also the single functions. In particular, the resins of the invention can be developed with the following aims:
1) to apply a resin resistant to the flame and thermal degradation in aeronautics, aerospace, automotive, nautical and infrastructural applications; other applications in aircraft manufacture are in the production of cabin walls, overhead bins, galleys and lavatories, among other interior parts.
2) to apply a resin resistant to the flame and thermal degradation able to simultaneously overcome some of the drawbacks related to the insulating properties of the resin used to manufacture carbon fiber reinforced composites (CFRC). Such material is applicable in aeronautics, aerospace, automotive, nautical and infrastructural applications.

According to a not claimed aspect , the epoxy resin is obtainable by curing an epoxy precursor formulation with an hardening agent which is an organophosphine oxide of general formula R₃PO, wherein at least two R moieties are amino-phenyl and one R moiety is alkyl, phenyl or amino-phenyl, wherein each phenyl ring may have independently one or more electrophile substituents.

Preferably, the ratio by weight between said epoxy precursor formulation and said hardening agent is in the range 40% to 100%, and more preferably 60% to 100%.

The hardening agent may preferably be Bis(3-aminophenyl)phenyl phosphine oxide (BAPPO), Bis(3-aminophenyl)methyl phosphine oxide (BAMPO), Tri(3-aminophenyl)phenyl phosphine oxide (TAPPO) or a mixture thereof.

Further advantageous hardening agents are (alkyl-bis-amino-aryl)phosphine oxide or tri-amino-arylphosphine oxide, having one or more than one electron withdrawing agents as substituents on the aryl groups, as indicated in the following compounds 1 to 6.

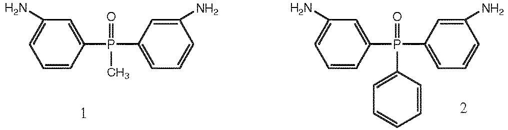

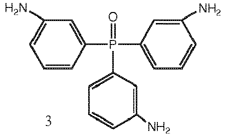

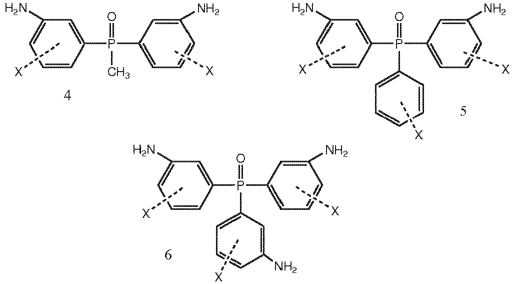

It is also possible using such hardening agents in combination with hardening agents which are not organophosphine compounds, such as the conventional 4,4'-diaminodiphenyl sulfone (DDS) or any other.

Bis(3-aminophenyl) phenyl phosphine oxide (3) is well-known and may e.g. be synthesized via a two-step route. Firstly, the bis(3-nitrophenyl) phenyl phosphine oxide (2) is obtained as an intermediate by reacting compound (1) with nitric acid/sulfuric acid. Then BAPPO is obtained by reduction of the intermediate (2) by means of hydrazine monohydrate. In sum, a possible synthesis route may be represented as follows:

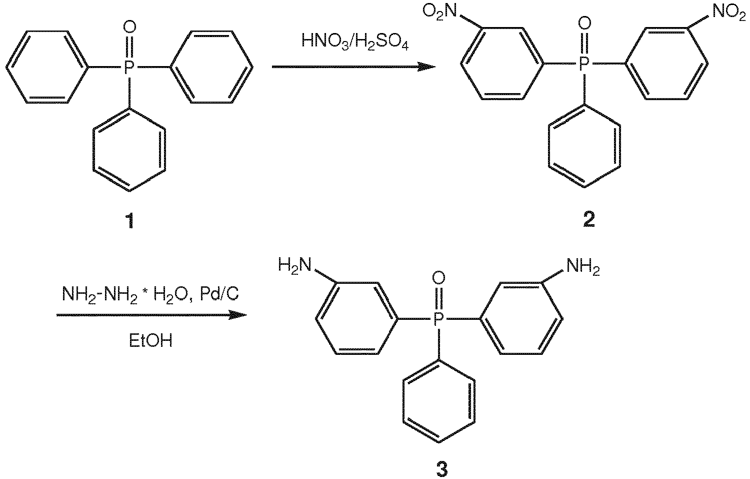

Bis(3-aminophenyl) methyl phosphine oxide (4) is well-known and may e.g. be synthesized through a process involving the following synthesis route:

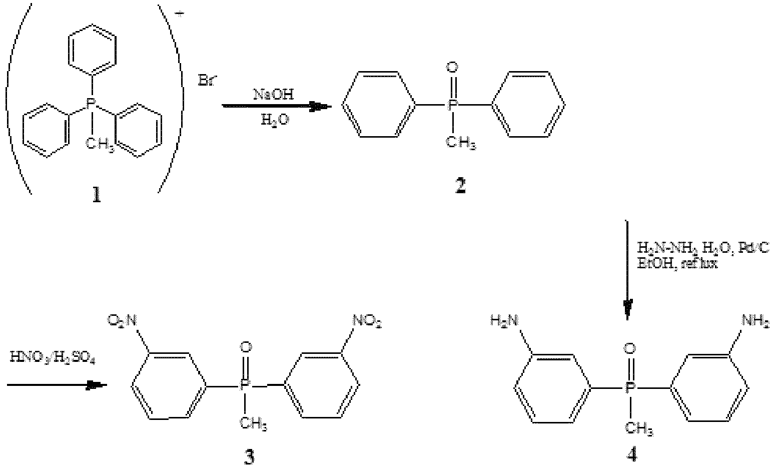

Electrophilic aromatic substitution on BAMPO, BAPPO and TAPPO by electron withdrawing groups on aryl amine rings produces the organo-phosphine oxides 4, 5 and 6 of Table 1 (where X=NO₂, Cl, Br, CN, RCO).

Any formulation known in the art may be used as epoxy precursor formulation: e.g. such formulation may contain tetrafunctional epoxy precursors and flexibilizer and/or reactive diluents.

According to the present invention, at least a silsesquioxane compound (POSS) is incorporated within the epoxy resin, in an amount in the range 0.5 to 5 wt.% referred to the total weight.

Said silsesquioxane compound (POSS) is selected in the group consisting of DodecaPhenyl POSS (DPHPOSS), Epoxycyclohexyl POSS (ECPOSS) and Glycidyl POSS (GPOSS) whose formulae and characteristics are reported in Table II which follows. As it is apparent therefrom, GPOSS and ECPOSS are functionalized with oxirane rings, and DPHPOSS is functionalized with phenyl groups.

**TABLE II**

| **POSS compounds investigated** | | |
|---|---|---|
| Acronym | Configuration | Characteristic |
| **DPH POS:** | 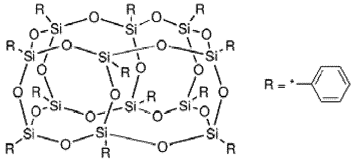 | **Dodecaphenyl silsesquioxanes** |
| | | Empirical Formula (Hill Notation) C₇₂H₆₀O₁₈Si₁₂ Molec.Weight 1550.26 FW |
| **EC POSS** | 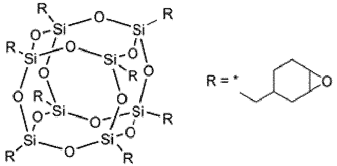 | **Epoxycyclohex 1 silsesquioxano** |
| | | Empirical Formula (Hill Notation) (C₈H₁₃O)ₙ (SiO_{1.5})n n=8,10,12 Molec. Weight 1418.20 (for n=8) |
| **G POSS** | 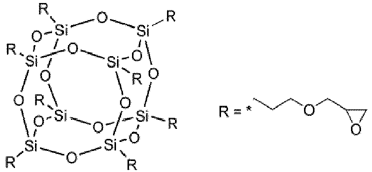 | **Glycidyl silsesquioxanes** |
| | | Empirical Formula (Hill Notation) (C₆H₁₁O₂)ₙ (SiO_{1.5} n=8,10,12 Molec.Weight 1337.88 (for n=8) |

Advantageously, a resin of the invention further incorporates conductive nanofillers, such as carbon nanotubes, e.g. functionalized and unfunctionalized SWCNTs, DWCNTs, MWCNTs, untreated and heat treated carbon nanofibers, carbon black, functionalized and unfunctionalized exfoliated graphite and graphene layers, whereby the insulating properties of the epoxy resin are changed and the latter becomes multifunctional.

Examples of preparation processes of epoxy resins according to the invention and comparative, respectively, are now provided by way of illustrative, non-limiting example.

Such examples demonstrate that the use of an organophosphine oxide as hardening agent or the incorporation of a POSS compound allows to obtain epoxy resins with flame retardants properties, which are improved in respect of the conventional resins.

The present invention embraces also the above-mentioned epoxy resins further containing conductive nanofillers embedded inside the respective matrix, which resins are in particular suitable for application in the aeronautic field.

### Example 1 (not representing the invention)

### Materials

The epoxy matrix T20B was prepared by mixing an epoxy precursor, tetraglycidyl methylene dianiline (TGMDA) (Epoxy equivalent weight 117-133 g/eq), with an epoxy reactive monomer 1-4 Butanediol diglycidyl ether (BDE) at a concentration of 80%:20% (by wt.), respectively.

The hardening agent used for the curing were Bampo and Bappo according to the invention, and DDS as reference. These hardening agents were added at a stoichiometric concentration with respect to all the epoxy rings (TGMDA and BDE).

TGMDA and BDE were obtained from Sigma-Aldrich, while Bampo and Bappo were synthesized following the above-disclosed synthesis routes.

Multiwall carbon nanotubes (MWCNTs) were obtained from Nanocyl S.A as 3100 Grade and 7000 Grade. The specific surface area of both multi-wall carbon nanotubes determined with the BET method is around 250-300 m²/g, the carbon purity is >95% with a metal oxide impurity <5% as it results by thermogravimetric analysis (TGA). TEM investigation has shown for the CNTs a diameter around 20 nm.

### Characterizations and Experimental procedure

Epoxy precursor blends or formulations and Bampo were mixed by magnetic stirring at 70°C. The degassing of the mixture was effected at 45°C.

Epoxy precursor blends or formulations and Bappo were mixed by magnetic stirring at 95°C. The degassing of the mixture was effected at 55°C.

When present, MWCNTs were added and incorporated into the mixture by ultrasonication for 20 minutes (using Hielscher model UP200S-24KHz high power ultrasonic probe).

The formulations were cured by a two-stage curing cycle: a first isothermal stage was carried out at the lower temperature of 125°C for 1 hour and a second isothermal stage was carried out at higher temperatures up to 200°C for 3 hours.

Fire resistance of the solidified epoxy samples was characterized by limiting oxygen index measurement (LOI) and mass loss calorimetry.

Experimental conditions for LOI tests: barrels of 80×10×3 mm³ are fixed in a vertical position and their top is inflamed with a burner. LOI, namely the minimum concentration of oxygen in a nitrogen/oxygen mixture required to just support the sample combustion, was measured following standard ASTM 2863.

Experimental conditions for mass loss calorimeter: plates of 100×100×3 mm³ are exposed to a radiant cone (50kW/m²) using a forced ignition. The heat of combustion released was measured using a thermopile according to standard ISO 13927, in order to obtain peak of heat release rate (PHRR) data.

Thermogravimetric analysis (TGA) was carried out with a Mettler TGA/SDTA 851 thermobalance. Resin samples were heated from 25°C to 900°C at a 10°C/min heating rate under air and nitrogen flow. The weight loss was recorded as a function of temperature.

The following table III, wherein the first, fourth and fifth line refer to reference samples using DDS as hardening agent, and the second, third and sixth line refer to samples according to the invention, reports the experimental data which were obtained.

**TABLE III**

| **Sample** | **LOI (%O₂)** | **PHRR (kW/m²)** |
|---|---|---|
| **T20BD (control)** | **27** | **540** |
| **T20B/Bampo (inv.)** | **40** | **447** |
| **T20B/Bappo (inv.)** | **36** | **379** |
| **T20BD+0.5wt% CNT(3100)** | **28** | **603** |
| **T20BD+1wt%CNT(3100)** | **28** | **629** |
| **T20B+Bampo+0.5wt% CNT3100(inv.)** | **38** | **561** |

As it is immediately apparent from the data of the first three samples, the resins of the invention have LOI values markedly improved in respect of the value 27 of the reference sample, which is representative of the highest value hitherto recorded for conventional epoxy resins. Furthermore, the resins of the samples according to the invention exhibit an important intumescence when compared with the resin of the control sample.

The last three samples (lines 4-6) refer to resins with conductive nanofillers embedded inside the respective matrix and the sample according to the present invention (line 6) shows an improvement in the PHRR - namely a decrease of this value - with respect to nanofilled samples hardened with DDS (lines 4 and 5). It has to be noticed that a low concentration of MWCNTs (0.5wt%) is advisable to reach the electrical percolation threshold.

### Example 2

The epoxy matrix T20B was prepared by mixing an epoxy precursor, tetraglycidyl methylene dianiline (TGMDA) (Epoxy equivalent weight 117-133 g/eq), with an epoxy reactive monomer 1-4 Butanediol diglycidyl ether (BDE) at a concentration of 80%:20% (by wt.), respectively.

GPOSS and ECPOSS functionalized with a different number of oxirane rings, and DPHPOSS functionalized with phenyl groups were dispersed in the epoxy matrix. The respective composites were prepared with 5 wt.% of POSS, which was dispersed in the epoxy matrix by ultrasonication and/or magnetic stirring.

The curing agent used for the curing was 4,4'-diaminodiphenyl sulfone (DDS). This hardener agent was added at a stoichiometric concentration with respect to all the epoxy rings (TGMDA, BDE and POSS - in the case of POSS with epoxy rings).

TGMDA, BDE and DDS were obtained from Sigma-Aldrich, while POSS compounds from Hybrid Plastics Company.

Epoxy matrices blended with POSS and DDS were mixed at 120°C and all the samples were cured by a two-stage curing cycle: a first isothermal stage was carried out at the lower temperature of 125°C for 1 hour and the second isothermal stage at higher temperatures up to 200°C for 3 hours.

### Characterizations and Experimental procedure

The obtained samples were subjected to thermogravimetric analysis and to the measurement of their values of LOI and PHRR according to the same procedures disclosed in Example 1.

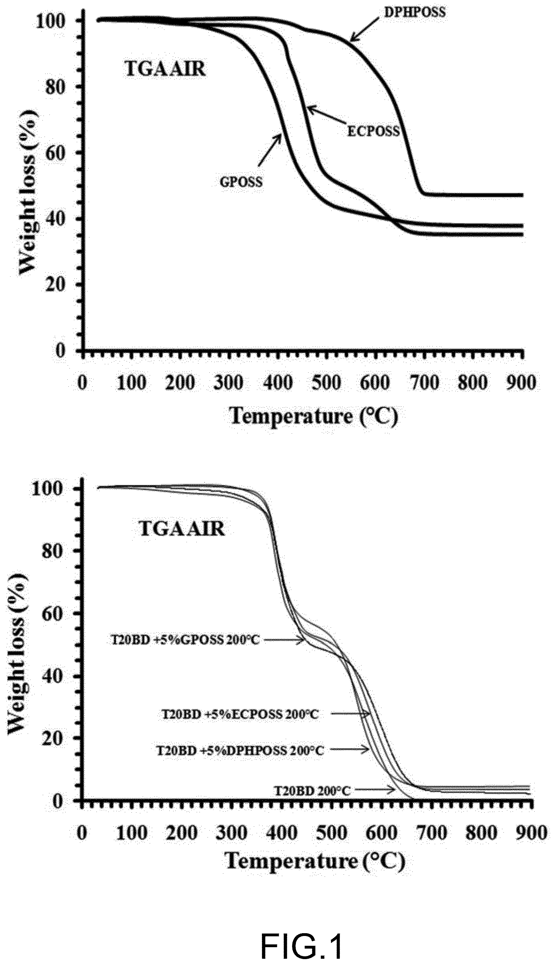

Figure 1 illustrates the thermogravimetric curves for POSS(on the left side), epoxy TB20D and POSS/epoxy mixture (POSS/EPM) (on the right side).

The thermal degradation process of pure POSS compounds is different for the various samples: DPHPOSS appears to be the most thermostable of the various POSS tested, while these considerable differences are not reflected in the POSS/EPM samples.

Thermogravimetric analysis shows that all the POSS/EPM samples are thermostable up to 400 °C. The epoxy matrix loses 4-5% in weight in the range 220-380 °C, and the use of DPHPOSS and ECPOSS stabilizes the resin up to 380-400 °C also with respect to this small decrease in the weight.

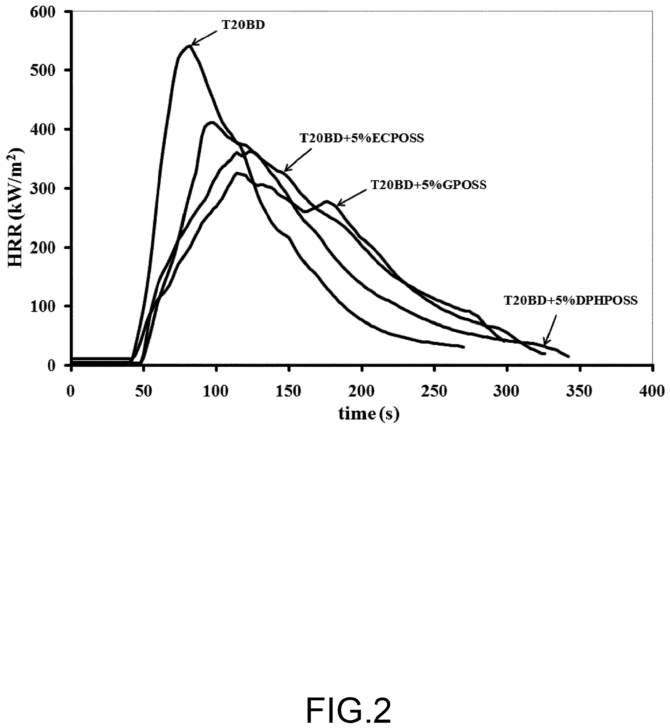

Figure 2 illustrates the Heat Release Rate (HRR) versus time curves for the different tested samples, whereby an indication of the fire behaviour of POSS/EPM is provided.

The fire behavior of TB20D is clearly modified in presence of POSS. In addition to the significant decrease of the peak of heat release rate, the time of ignition is slightly increased for DPHPOSS and ECPOSS. Table IV shows the limiting oxygen index(LOI)and the values of the peak of heat release rate(PHRR) for the tested samples. It appears that the presence of POSS compounds undoubtedly acts as flame retardant for TB20D epoxy system, as shown by the increase of LOI values and the decrease of the PHRR values. GPOSS leads to the best increase of LOI (22% with respect to TB20D value). The best behaviour is also confirmed by the larger decrease in the PHRR value; in fact, a decrease from 540 kW/m² to 327 kW/m² was observed in the PHRR of the TB20D+5%GPOSS sample for which the smallest value is observed. These results are to be related to the fully epoxidized structure of GPOSS which allows a better dispersion of the POSS particles due to complete dissolution within TB20D matrix and chemical linkages with the epoxy system. It is interesting to point out that DPHPOSS which exhibits the most thermostable structure also leads to a significant increase of LOI and decrease of PHRR. However, DPHPOSS particles do not play any reactive role towards TB20D epoxy system and somewhat surprisingly show a very good behavior in the formulation of the invention.

**TABLE IV**

| Sample | LOI (%O₂) | PHRR (kW/m²) |
|---|---|---|
| T20BD | 27 | 540 |
| TB20D+5%DPHPOSS | 30 | 362 |
| TB20D+5%ECPOSS | 28 | 411 |
| TB20D+5%GPOSS | 33 | 327 |

In sum, the incorporation of 5 wt.% POSS compounds into an epoxy matrix resulted in a LOI value higher than the value of 27 corresponding to the pure epoxy mixture. The trend observed with LOI tests was confirmed by mass loss calorimetric measurements: a decrease was observed in the peak of heat release rate (PHRR) for all the samples.

### EXAMPLE 3

This example compares the fire behavior of epoxy resins with or without POSS and with or without carbon nanotubes (CNTs).

The preparation procedure is the same as in Example 2 with the further addition of CNTs, when required.

Table V reports the PHRR data which were measured following the same procedure disclosed in Example 1.

**TABLE V**

| **Sample** | **Without CNT3100** | **With CNT3100 (1wt%)** |
|---|---|---|
| **TB20D** | **540** | **629** |
| **TB20D+ 5%DPHPOSS** | **362** | **348** |
| **TB20D+ 5% GPOSS** | **327** | **464** |

PHRR of the samples with CNTs are significantly decreased in presence of DPHPOSS or GPOSS with respect to the sample nano-filled with CNTs, but without POSS compounds. In fact, a value of PHRR of 348 is measured when DPHPOSS is used, with respect to 540 for the unfilled sample, and a value of 464 is measured when GPOSS is used, with respect to 540 for the unfilled sample.

### Example 4

This example provides the data of electrical conductivity of various samples, proving that nanofilled samples of the invention have multifunctional properties, i.e. both of fire resistance and electrical conductivity.

In particular, Table VI contains DC conductivities data of nanofilled epoxy resin samples.

**TABLE VI**

| Sample | Conductivity values (S/m) |
|---|---|
| T20BD | 8.00E-13 |
| T20B+BAMPO+0.5%CNT3100 | 1.68E-1 |
| T20B+BAPPO(n.s)+0.5%CNT3100 | 1.10E-1 |
| T20BD+5%GPOSS+0.5%CNT3100 | 3.54E-3 |
| T20BD+5%GPOSS+0.5%PR25XTPS2500 | 1.35E-1 |
| T20BD + 5% GPOSS+ 1.8%HEG | 1.33 |

wherein HEG means "exfoliated graphene" and PR25XTPS2500 means Vapor-grown Carbon nanofibers produced at Applied Sciences Inc. and treated at 2500 °C to provide the best combination of mechanical and electrical properties.

### Example 5

DMA analysis was performed on TA instruments DMA2980 under the following conditions:
- Dual cantilever mode to avoid sample sliding,
- Temperature scan from 25°C to 320°C at 3°C/min,
- amplitude: 18µm,
- Frequency: 1Hz,
- Preload force: 0.01N,
- Specimen dimensions: 50mm×10mm×3mm

Table VII indicates the maximum of temperature of the main mechanical transition Tm associated to the glass transition temperature of the epoxy samples.

**TABLE VII**

| **Sample** | **DMA-Tg (°C)** |
|---|---|
| **TB20+BAMPO** | **218** |
| **TB20+BAPPO** | **227** |
| **TB20D+ 0.5% CNT** | **258** |
| **TB20D+ 5 % DPHPOSS +0.5 % CNT** | **258** |
| **TB20D+ 5 % GPOSS+ 0.5 % CNT** | **261** |
| **TB20D+ 5 % GPOSS+ 1 % CNT** | **261** |
| **TB20D+ 1% CNT** | **263** |
| **TB20D+ 5 % DPHPOSS+ 1 % CNT** | **264** |
| **TB20D+ BAMPO+ 0.5 % CNT** | **222** |

The samples with the BAPPO and BAMPO hardeners lead to a decrease of the epoxy network glass transition values, but such decrease does not hinder the use of the respective resins as structural materials.

## Claims

1. Epoxy resin prepared from a precursor formulation of epoxy precursor tetraglycidyl methylene dianiline (TGMDA) and epoxy reactive monomer 1,4-butanediol diglycidyl ether (BDE) at a concentration of 80%:20% by weight and having a limiting oxygen index (LOI) measured according to standard ASTM 2863, which is at least 28%, wherein the resin comprises at least a silsesquioxane compound (POSS) which is selected in the group consisting of DodecaPhenyl POSS (DPHPOSS), Epoxycyclohexyl POSS (ECPOSS) and Glycidyl POSS (GPOSS), said GPOSS and ECPOSS being functionalized with oxirane rings, and said DPHPOSS being functionalized with phenyl groups, and wherein said at least a silsesquioxane compound (POSS) is present in an amount in the range 0.5 to 5 wt.% referred to the total weight.

## Patentansprüche

1. Epoxidharz, das aus einer Vorläuferformulierung des Epoxidvorläufers Tetraglycidylmethylendianilin (TGMDA) und epoxidreaktivem monomerem 1,4-Butandioldiglycidylether (BDE) mit einer Konzentration von 80%:20% nach Gewicht zubereitet ist und einen Grenzsauerstoffindex (LOI) gemessen gemäß dem Standard ASTM 2863, der mindestens 28% ist, aufweist, bei dem
das Harz zumindest eine Silsesquioxanverbindung (POSS) aufweist, die in der Gruppe ausgewählt ist, die aus DodecaPhenyl-POSS (DPHPOSS), Epoxycyclohexyl-POSS (ECPOSS) und Glycidyl-POSS (GPOSS) besteht, bei denen das GPOSS und ECPOSS mit Oxiranringen funktionalisiert sind und das DPHPOSS mit Phenylgruppen funktionalisiert ist, und bei dem die zumindest eine Silsesquioxanverbindung (POSS) in einer Menge in dem Bereich 0,5 bis 5 Gew.- % bezogen auf das Gesamtgewicht vorliegt.

## Revendications

1. Résine époxy préparée à partir d'une formulation de précurseurs du précurseur époxy tétraglycidylméthylène-dianiline (TGMDA) et du monomère époxy réactif 1,4-butane-dioldiglycidyléther (BDE) à une concentration de 80 % : 20 % en poids et ayant un indice critique d'oxygène (LOI) mesuré conformément à la norme ASTM 2863, qui est au moins de 28 %, dans laquelle la résine comprend au moins un composé de silsesquioxane (POSS) qui est sélectionné dans le groupe constitué du dodécaphényl POSS (DPHPOSS), de l'époxycyclohexyl POSS (ECPOSS) et du glycidyl POSS (GPOSS), lesdits GPOSS et ECPOSS étant fonctionnalisés avec des cycles oxirane, et ledit DPHPOSS étant fonctionnalisé avec des groupes phényle, et dans laquelle ledit au moins un composé de silsesquioxane (POSS) est présent en une quantité dans la plage de 0,5 à 5 % en poids par rapport au poids total.
